# EUROPEAN PATENT APPLICATION

(11) **EP 1 231 542 A2**
(43) Date of publication of application: **14.08.2002**
(21) Application number: 02250271.0
(22) Date of filing: 15.01.2002
(51) Int. Cl.: G06F 13/38

(54) **Data transmission system**

(30) Priority: 15.01.2001 JP 2001006777
(71) Applicant: NEC Corporation, Minato-ku, Tokyo 108-8001 (JP)
(72) Inventor: Shiosaki, Toyotaka, Kawasaki-shi, Kanagawa (JP)
(74) Representative: Robson, Aidan John

(57) **Abstract**

A data transmission system performs a high speed data transmission process between a device (17) (storage device) and a memory (13) or a CPU (12), without changing a frequency of a system clock. The system generates a first clock signal used for data transmission and a second clock signal which has a lower frequency than that of the first clock signal and is used for instruction command transmission, in a clock generator (15). The system transmits instruction commands from the CPU (12) to the device (17) by using the second clock signal. After that, the system transmits data from the memory (13) to the device by using the first clock signal.

## Description

### BACKGROUND OF THE INVENTION:

### Field of the Invention

The invention relates to a data transmission system and, in particular, to a data transmission system which transmits data between a hard disk drive and a memory via an IDE interface.

### Description of the Related Art

Conventionally, a data transmission system (for example, a system which transmits data between a hard disk drive and a memory) is included in a computer such as a personal computer. The data transmission system uses (diverts) an IP (Intellectual property) core and sometimes performs data transmission process at a speed higher than the maximum transmission rate of the IP core.

The data transmission system often uses one of three typical data transmission methods. That is, a PIO (Programmed I/O) transmission method, a multi-word DMA (Direct Memory Access) transmission method, and an UltraDMA transmission method.

Since the UltraDMA transmission method provides a high speed data transmission as described later, in recent years, most hard disks incorporated in personal computers adopts the UltraDMA transmission method. As a result, the UltraDMA transmission method has become a defacto standard.

However, when data are transmitted between a device like a hard disk and a memory, it may be required to perform a data transmission process at a speed higher than a possible speed of the UltraDMA transmission method. To increase the speed of the data transmission process, it is thought, for example, that a frequency of a system clock supplied to a transmission device is increased.

Although the increasing of the frequency of the system clock results in a high speed data transmission between the device and the memory, when a CPU sends various commands to the device, that is, when the CPU accesses the device, the changed high frequency system clock cannot be used. Therefore, it is desirable to perform a high speed data transmission process between the device and the memory without change of the frequency of the system clock.

### SUMMARY OF THE INVENTION:

Therefore, embodiments of the invention provide a data transmission system which is capable of performing a high speed data transmission process between a device (a storage device) and a memory without change of the frequency of a system clock.

According to an embodiment of the invention, there is provided a data transmission system. The system comprises a data transmission device which transmits data stored in a memory or an instruction command generated by a CPU to a storage device, and a clock generator which generates a first clock signal and a second clock signal which has a frequency lower than that of the first clock signal. The data transmission device transmits the instruction command from the CPU to the storage device by using the second clock signal, and after that, transmits the data from the memory to the storage device by using the first clock signal.

In a further embodiment of the invention, the data transmission system is configured to have the data transmission device which transmits the data transmitted to and stored in the storage device, to the memory by using the first clock signal.

In a further embodiment of the invention, the data transmission system is configured to have a hard disk drive as the storage device.

In a further embodiment of the invention, the data transmission system is configured to have the data transmission device which comprises an interface transmitting the data to the storage device by using the first clock signal, and transmitting the instruction command to the storage device by using the second clock signal.

In a further embodiment of the invention, the data transmission system is configured to have the storage device including a status register, and the first clock signal is used on accessing the status register.

In a further embodiment of the invention, the data transmission system is configured to have the interface which changes a clock signal from the first clock signal to the second clock signal, or from the second clock signal to the first signal, based on a signal supplied in response to a notification that the storage device successfully receives the data or the instruction command.

In a further embodiment of the invention, there is provided a method of transmitting data in a data transmission system having a data transmission device which transmits data stored in a memory or an instruction command generated by a CPU to a storage device. The method comprises the steps of (1) generating, at a clock generator, a first clock signal, and a second clock signal which has a frequency lower than that of the first clock signal, (2) transmitting, at the data transmission device, the instruction command from the CPU to the storage device by using the second clock signal, and (3) transmitting, at the data transmission device, the data from the memory to the storage device by using the first clock signal.

In a further embodiment of the invention, there is provided a recording medium readable by a computer, tangibly embodying a program of instructions executable by the computer to perform a method of transmitting data in a data transmission system having a data transmission device which transmits data stored in a memory or an instruction command generated by a CPU to a storage device. The method comprises the steps of (1) generating, at a clock generator, a first clock signal, and a second clock signal which has a frequency lower than that of the first clock signal, (2) transmitting, at the data transmission device, the instruction command from the CPU to the storage device by using the second clock signal, and (3) transmitting, at the data transmission device, the data from the memory to the storage device by using the first clock signal.

In a further embodiment of the invention, there is provided a computer data signal embodied in a carrier wave and representing a sequence of instructions which, when executed by a processor, cause the processor to perform a method of transmitting data in a data transmission system having a data transmission device which transmits data stored in a memory or an instruction command generated by a CPU to a storage device. The method comprises the steps of (1) generating, at a clock generator, a first clock signal, and a second clock signal which has a frequency lower than that of the first clock signal, (2) transmitting, at the data transmission device, the instruction command from the CPU to the storage device by using the second clock signal, and (3) transmitting, at the data transmission device, the data from the memory to the storage device by using the first clock signal.

In a further embodiment of the invention, there is provided a program product comprising, computer readable instructions and a recording medium bearing the computer readable instructions. And the instructions are adaptable to enable a computer to perform a method of transmitting data in a data transmission system having a data transmission device which transmits data stored in a memory or an instruction command generated by a CPU to a storage device. The method comprises the steps of (1) generating, at a clock generator, a first clock signal, and a second clock signal which has a frequency lower than that of the first clock signal, (2) transmitting, at the data transmission device, the instruction command from the CPU to the storage device by using the second clock signal, and (3) transmitting, at the data transmission device, the data from the memory to the storage device by using the first clock signal.

### BRIEF DESCRIPTION OF THE DRAWINGS:

Fig. 1 shows a table representing the maximum transmission rates of three transmission methods in the prior art, for each mode of the methods;
Fig. 2 shows a block diagram representing a schematic configuration of a data transmission system according to an embodiment of the invention;
Fig. 3 shows a block diagram schematically showing an inner construction of an interface shown in Fig. 2;
Fig. 4 shows a block diagram schematically showing a clock switching circuit shown in Fig. 2;
Fig. 5 shows a flowchart of a data transmission process in the data transmission system shown in Fig. 2;
Fig. 6 shows a diagram representing the clock switching circuit which sends either of a clock signal for access or a clock signal for data transmission to the interface, under software control; and
Fig. 7 shows a diagram schematically showing an inner construction of another data transmission device having a frequency divider.

### DESCRIPTION OF THE PREFERRED EMBODIMENT:

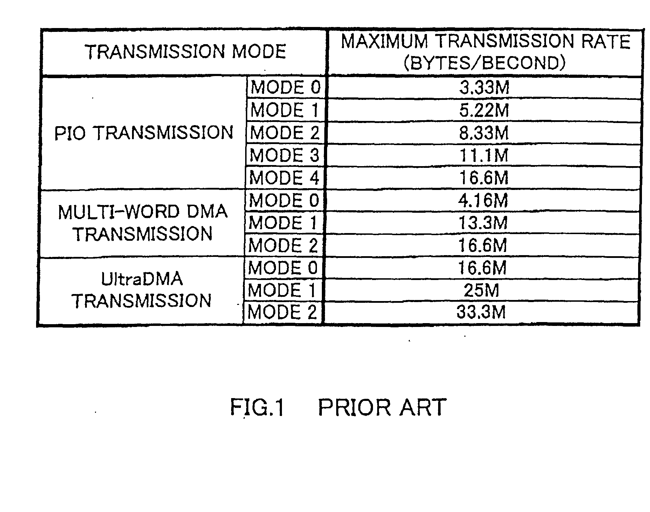

First, description is made about the maximum data transmission rates of the three data transmission methods known in the prior art, with reference to Fig. 1.

Each of the data transmission methods includes a plurality of transmission modes. In Fig. 1, the maximum data transmission rates are shown for each transmission mode.

In the PIO transmission method, a CPU controls a data transmission process between a device like a hard disk and a memory. In the multi-word DMA transmission method, a data transmission process between the device and the memory is directly performed without control of the CPU. The UltraDMA transmission method is a method in which the multi-word transmission method is extended so as to perform twice transmission processes per a time.

According to the difference among the transmission methods, each of the transmission method (transmission mode) has inherent maximum data transmission rate which is different from the maximum data transmission rates of the others.

For example, regarding to the PIO transmission method, the maximum data transmission rates in mode 0, in mode 1, in mode 2, in mode 3, and in mode 4 are 3.33 MB/sec, 5.22 MB/sec, 8.33 MB/sec, 11.1 MB/sec, and 16.6 MB/sec, respectively.

However, since a load of a CPU is outstanding in the PIO transmission method, a transmission method based on a DMA technology is being generally used.

In the multi-word DMA transmission method, the maximum data transmission rates in mode 0, in mode 1, and in mode 2 are 4.16 MB/sec, 13.3 MB/sec, and 16.6 MB/sec, respectively. Also, in the UltraDMA transmission method, the maximum transmission rates in mode 0, in mode 1, and in mode 2 are 16.6 MB/sec, 25 MB/sec, and 33.3 MB/sec, respectively.

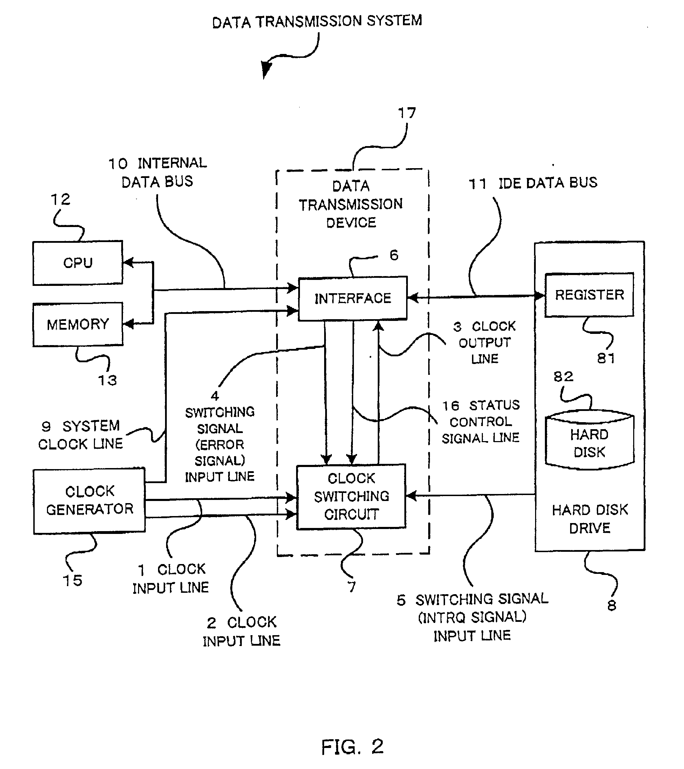

Next, description is made about an embodiment of the invention with reference to Fig. 2.

In the data transmission system shown in Fig. 2, a frequency of a clock signal is used when various instruction commands are transmitted from a CPU 12 to a hard disk drive 8. And another frequency of the clock signal is used when data are transmitted from a memory 13 to the hard disk drive 8.

The instruction commands may include a command to deal with the data transmitted from the memory 13 to the hard disk drive 8.

The data transmission system includes the memory 13 which stores data, the hard disk drive 8 (which is also, hereinafter, referred to as "HDD") which is a storage device, a data transmission device 17 which performs a data transmission process between the memory 13 and the HDD 8, a clock generator 15 which generates a clock signal used as a reference signal of operations of the system, an instruction command transmission, and a data transmission, and the CPU 12 which controls the operations of the system.

The data transmission device 17 includes an interface 6 (which is also, hereinafter, referred to as "I/F") which enables to perform a data transmission process by connecting the HDD 8 to the memory 13, and a clock switching circuit 7 which switches a clock signal supplied to the I/F 6. The HDD 8 includes a hard disk 82 which stores data transmitted from the memory 13, and various registers 81 which store various instructions sent from the CPU 12.

Also, the I/F 6 is connected to the memory 13 and the CPU 12 via an internal data bus 10, and is connected to the HDD 8 via an IDE data bus 11. Further, to the I/F 6, a system clock generated by the clock generator 15 is supplied via a system clock line 9. A soft-reset register may be located in the I/F 6 to remove noise which occurs on switching the clock signal.

Further, to the clock switching circuit 7, an access clock signal (which is used to access) which is generated by the clock generator 15 is supplied via a clock input line 1, and a transmission clock signal (which is used to transmit) which has a frequency higher than a frequency of the access clock signal is supplied via a clock input line 2. Also, a switching signal (for example, INTRQ signal) which prompts to switch from the access clock signal to the transmission clock signal is supplied to the circuit 7 via a switching signal input line 5.

Additionally, a status read signal which is used to access a status register in the register 81 is supplied to the circuit 7 via a status control signal line 16, another switching signal (for example, an error signal of the status register) which prompts to switch from the transmission clock signal to the access clock signal is supplied to the circuit 7 via a switching signal input line 4, and a clock signal is supplied to the I/F 6 via a clock output line 3.

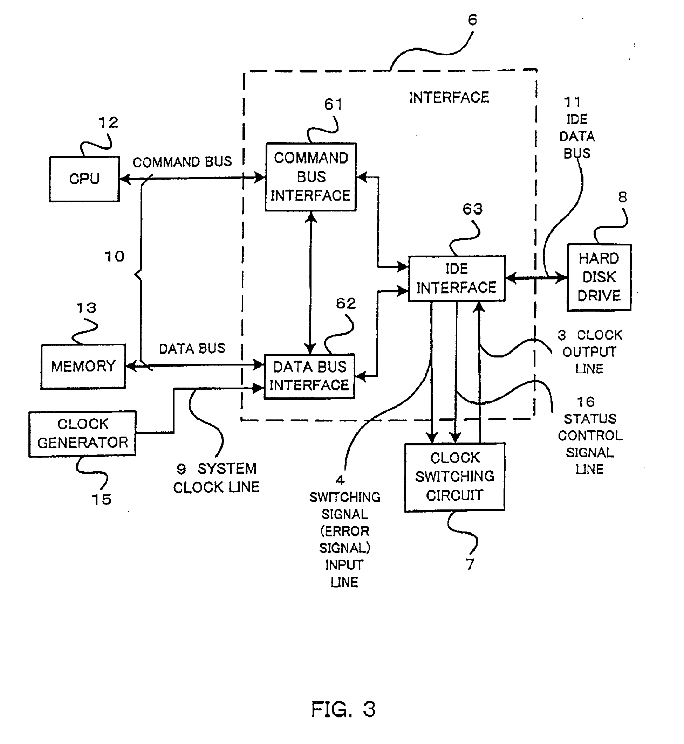

In Fig. 3, a command bus I/F 61, a data bus I/F 62, and an IDE I/F 63 are shown. The command bus I/F 61 returns to the CPU 12, via a command bus, a notification showing whether commands supplied from the CPU 12 via the command bus are sent to the HDD 8 and various commands are entered from the HDD 8.

The data bus I/F 62 receives data supplied from the memory 13 via a data bus and sends them to the HDD 8 via the IDE data bus 11, and receives data supplied from the HDD 8 via the IDE data bus 11 and sends them to the memory 13 via the data bus.

The IDE I/F 63 outputs commands and data supplied from the command bus I/F 61 and the data bus I/F 62 to the HDD 8, and outputs notifications and data supplied form the HDD 8 to the command bus I/F 61 and the data bus I/F 62.

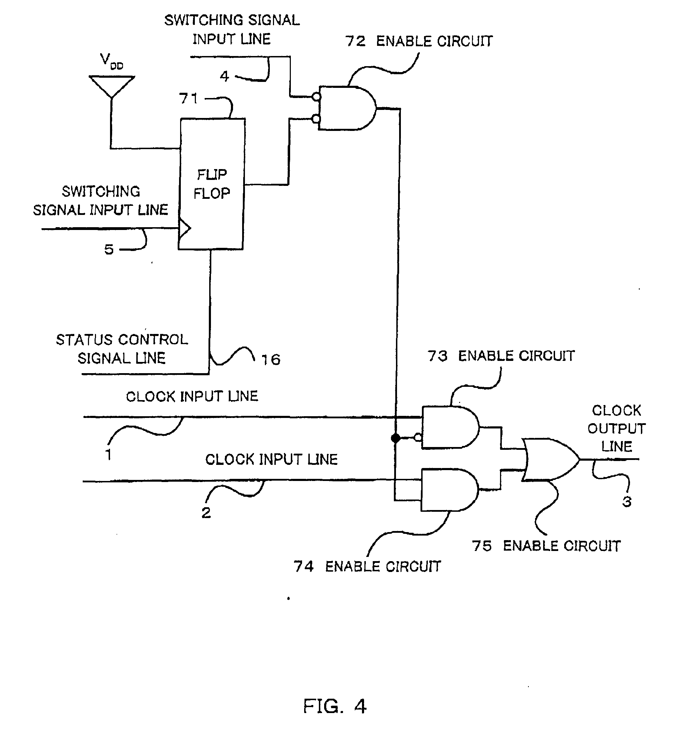

In Fig. 4, the clock switching circuit 7 includes a flip-flop circuit 71 (which is also, hereinafter, referred to as "FF"), an enable circuit 72, an enable circuit 73, an enable circuit 74, and an enable circuit 75.

The FF 71 is connected to an internal power supply V_{DD} and outputs a signal in response to the switching signal supplied via the switching signal input line 5 and the status read signal supplied from the status control signal line 16.

The enable circuit 72 inputs an output signal of the FF 71 and a switching signal supplied via the switching signal input line 4. The enable circuit 73 inputs an output signal of the enable circuit 72 and the access clock signal supplied via clock input line 1.

The enable circuit 74 inputs an output signal of the enable circuit 72 and the transmission clock signal supplied via the clock input line 2. The enable circuit 75 inputs an output signal of the enable circuit 73 and an output signal of the enable circuit 74.

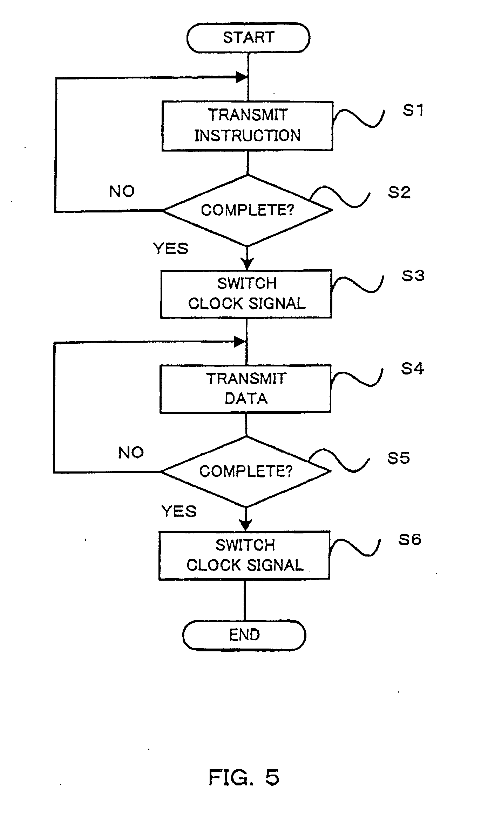

Then, description is made about a procedure of a data transmission process according to the embodiment of the invention, with reference to Fig. 5.

First, a system clock signal generated by the clock generator 15 is supplied to the I/F 6 via the system clock line 9. The access clock signal and the transmission clock signal, which are also generated by the clock generator 15, are supplied to the clock switching circuit 7 in the data transmission device 17.

In the clock switching circuit 7, the access clock signal is supplied to the enable circuit 73 and the transmission clock signal is supplied to the enable circuit 74. Further, for example, the INTRQ signal and the status read signal are supplied to the FF 71, and the error signal of the status register 81. Herein, the clock switching circuit 7 inputs the access clock signal and the transmission clock signal, and outputs the access clock signal to the I/F 6.

In this situation, when the CPU 12 outputs instruction commands after data are transmitted to the HDD 8, the instruction commands are supplied to the I/F 6 in the data transmission device 17 via the command bus of the internal data bus 10. When the I/F 6 receives the instruction commands from the CPU 12, the I/F 6 sends the instruction commands to the IDE data bus 11 via the command bus I/F 61 and the IDE I/F 63, and outputs the status read signal to the status control signal line 16.

Then, the status read signal supplied to the status control signal line 16 is entered to the clock switching circuit 7 and a reset operation of the FF 71 is performed. Also, the instruction commands supplied to the IDE data bus 11 is entered to the HDD 8. Thus, the instruction commands generated by the CPU 12 are transmitted to the HDD 8 (step S1).

When the HDD 8 receives the instruction commands, the HDD 8 stores the instruction commands into a command register in the register 81. Herein, when the instruction commands supplied form the CPU 12, for example, are not stored successfully, a retransmission request is issued from the HDD 8 to the CPU 12 (step S2). After that, the procedure returns to step S1, and the CPU 12 retransmits the instruction commands to the HDD 8.

On the other hand, when the instruction commands are transmitted to the HDD 8 and the instruction commands are sent to the command register, the data transmission device 17 determines whether or not the instruction commands are successfully stored into the HDD 8 (step S2).

When the data transmission device 17 determines that the instruction commands are successfully stored into the HDD 8, the I/F 6 sends the notification (a switching signal) to the clock switching circuit 7 via the switching signal input line 4. When the enable circuit 72 in the clock switching circuit 7 receives the switching signal via the switching signal input line 4, the enable circuit 72 detects that a switching signal on the switching signal input line 4 is changed. The circuit 72, in response to the reception, stops supplying of the access clock signal by using a mask and starts supplying of the transmission clock signal to the I/F 6 (step S3).

Furthermore, the I/F 6 sends back a notification showing that the instruction commands are successfully transmitted to the command register, to the CPU 12. When the CPU 12 receives the notification, the CPU 12 instructs the memory 13 to transmit data stored in the memory 13 to the HDD 8. The memory 13 outputs the data to the internal data bus 10 according to the instruction of the CPU 12.

The data supplied to the internal data bus 10 are then entered to the I/F 6 in the data transmission device 17. When the I/F 6 receives the data, the I/F 6 sends the data to the IDE data bus 11 via the data bus I/F 62 and IDE I/F 63. Thus, the data stored in the memory 13 are transmitted to the HDD 8 (step S4).

Then, the HDD 8 stores the transmitted data. Herein, when, for example, the data supplied from the memory 13 are not stored successfully to the data register, the HDD 8 issues a retransmission request to the memory 13 via the CPU 12 (step S5). Then, the procedure returns to step S4 and data are retransmitted from the memory 13 to the HDD 8.

On the other hand, the data are transmitted to the HDD 8 successfully and the data are stored into the hard disk 82 (step S5), the HDD 8 sends a notification (switching signal) showing that the transmission is completed successfully, to the data transmission device 17. After that, the notification is sent to the clock switching circuit 7 via the switching signal input line 5. When the FF 71 in the clock switching circuit 7 detects a change of a signal on the switching signal input line 5, the FF 71 suspends supplying of the transmission clock signal by using a mask, and starts supplying the access clock signal to the I/F 6 (step S6).

Furthermore, the I/F 6 sends back to the CPU 12 a notification showing that the data are successfully transmitted to the HDD 8, and then a series of transmission operations is completed. Therefore, at this time, HDD 8 becomes in a condition that instructions can be acceptable or a register access protocol can be performed.

Also, the I/F 6 can notify the CPU 12 of the completion of a data transmission process by returning a status read signal in response to a request of the CPU 12. In this case, when the clock signal, for example, is not successfully switched at step S6, the CPU 12 issues a switch instruction of the clock signal to the I/F 6.

The HDD 8 includes a command register, a data register, and other various registers, and the CPU 12 may transmit various instructions (commands, parameters) to the other various register in the HDD 8. At the transmission of the various instructions, the access clock signal is used.

Also, the switching signal to prompt to switch the clock signal may be, for example, an error signal of a status register used in an IDE, or an INTRQ signal. Further, the HDD 8 may generate switching signal in response to a completion of transmission of the instruction command or the data, and send the switching signal to the data transmission device 17.

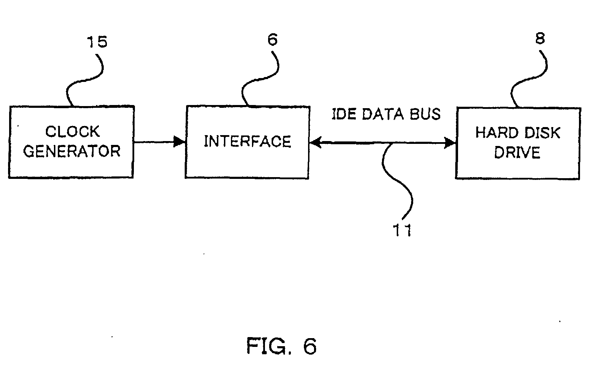

Also, a data transmission system can be configured as shown in Fig. 6. In the data transmission system, the clock switching circuit 7 is not prepared, and the access clock signal or the transmission clock signal can be generated by the clock generator 15 using a software program and sent to the I/F 6.

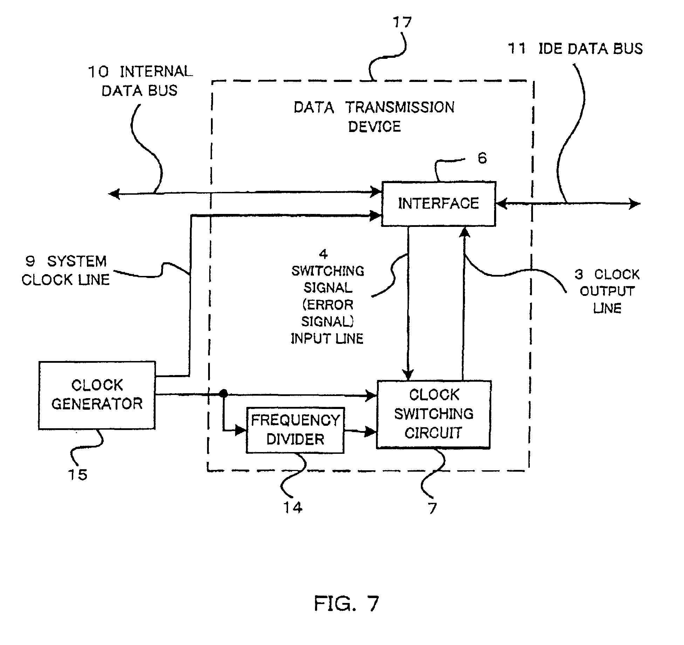

Further, a data transmission system can be configured as shown in Fig. 7. In the data transmission system, the clock generator 15 does not generate both the access clock signal and the transmission clock signal. For example, the clock generator 15 sends the access clock signal to the clock switching circuit 7 and the frequency divider 14 in parallel. Then, the frequency divider 14 divides the access clock signal to generate the data transmission signal.

According to the embodiments of the invention, a data transmission rate can be increased at ATA/ATAPI (AT attachment/AT attachment packet interface) without departing from a standard, by switching a transmission clock using an IDE interface. Also, in this case, a size of a circuit is almost unchanged, since only an addition of a clock switching circuit is required.

As described above, the data transmission system embodying the invention includes a clock generator which generates a clock signal used for data transmission and a clock signal used for instruction command transmission. The system can perform high speed data transmission between a device and a memory without changing a frequency of a system clock, since the data are transmitted from the memory to the device using the clock signal used for data transmission, after the instruction command is transmitted from a CPU to the device using the clock signal used for the instruction command transmission.

## Claims

1. A data transmission system comprising:
a data transmission device (17) which transmits data stored in a memory (13) or an instruction command generated by a CPU (12) to a storage device (8); and
a clock generator (15) which generates a first clock signal and a second clock signal which has a frequency lower than that of the first clock signal, wherein the data transmission device (17) transmits the instruction command from the CPU (12) to the storage device (8) by using the second clock signal, and after that, transmits the data from the memory (13) to the storage device (8) by using the first clock signal.

2. The data transmission system of claim 1, wherein the data transmission device (17) transmits the data which are transmitted to and stored in the storage device (B), to the memory (13) by using the first clock signal.

3. The data transmission system of claim 1, wherein the storage device (8) is a hard disk drive.

4. The data transmission system of claim 1 or 2, wherein the data transmission device (17) comprises an interface (6) which transmits the data to the storage device (8) by using the first clock signal, and transmits the instruction command to the storage device (8) by using the second clock signal.

5. The data transmission system of claim 1, 2 or 3, wherein the storage device (8) includes a status register (81) and the first clock signal is used on accessing the status register (81).

6. The data transmission system of claim 4, wherein the interface (6) change a clock signal from the first clock signal to the second clock signal, or from the second clock signal to the first signal, based on a signal supplied in response to a notification that the storage device successfully receives the data or the instruction command.

7. A method of transmitting data in a data transmission system having a data transmission device (17) which transmits data stored in a memory (13) or an instruction command generated by a CPU (12) to a storage device (8), comprising the steps of:
generating, at a clock generator (15), a first clock signal, and a second clock signal which has a freqnency lower than that of the first clock signal;
transmitting, at the data transmission device (17), the instruction command from the CPU (12) to the storage device (8) by using the second clock signal; and
transmitting, at the data transmission device (17), the data from the memory (13) to the storage device (8) by using the first clock signal.

8. The method of claim 7 further comprising the step of:
transmitting, at the data transmission device (17), the data which are transmitted to and stored in the storage device (8), to the memory (13) by using the first clock signal.

9. The method of claim 7 or 8, wherein changing of the clock signals at the data transmission device (17) is performed in response to a notification that the storage device successfully receives the data or the instruction command.

10. A recording medium readable by a computer, tangibly embodying a program of instructions executable by the computer to perform a method of transmitting data in a data transmission system having a data transmission device (17) which transmits data stored in a memory (13) or an instruction command generated by a CPU (12) to a storage device (8), comprising the steps of:
generating, at a clock generator (15), a first clock signal, and a second clock signal which has a frequency lower than that of the first clock signal;
transmitting, at the data transmission device (17), the instruction command from the CPU (12) to the storage device (8) by using the second clock signal; and
transmitting, at the data transmission device (17), the data from the memory (13) to the storage device (8) by using the first clock signal.

11. A computer data signal embodied in a carrier wave and representing a sequence of instructions which, when executed by a processor, cause the processor to perform a method of transmitting data in a data transmission system having a data transmission device (17) which transmits data stored in a memory (13) or an instruction command generated by a CPU (12) to a storage device (8), comprising the steps of:
generating, at a clock generator (15), a first clock signal, and a second clock signal which has a frequency lower than that of the first clock signal;
transmitting, at the data transmission device (17), the instruction command from the CPU (12) to the storage device (8) by using the second clock signal; and
transmitting, at the data transmission device (17), the data from the memory (13) to the storage device (8) by using the first clock signal.

12. A program product comprising, computer readable instructions and a recording medium bearing the computer readable instructions, the instructions being adaptable to enable a computer to perform a method of transmitting data in a data transmission system having a data transmission device (17) which transmits data stored in a memory (13) or an instruction command generated by a CPU (12) to a storage device (8), comprising the steps of:
generating, at a clock generator (15), a first clock signal, and a second clock signal which has a frequency lower than that of the first clock signal;
transmitting, at the data transmission device (17), the instruction command from the CPU (12) to the storage device (8) by using the second clock signal; and
transmitting, at the data transmission device (17), the data from the memory (13) to the storage device (8) by using the first clock signal.
